Europäisches Patentamt

European Patent Office

Office européen des brevets

(19)

(11) **EP 0 777 907 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(21) Anmeldenummer: **95928439.9**

(22) Anmeldetag: **17.08.1995**

(51) Int Cl.⁶: **H01H 71/04**, H01H 9/16, H01H 71/24, H02H 3/04, H02H 5/00

(86) Internationale Anmeldenummer:
**PCT/DE95/01089**

(87) Internationale Veröffentlichungsnummer:
**WO 96/07192 (07.03.1996 Gazette 1996/11)**

(54) **ELEKTROMECHANISCHES SCHALTGERÄT SOWIE ANORDNUNG MIT MEHREREN DERARTIGEN SCHALTGERÄTEN**

ELECTROMECHANICAL SWITCHING DEVICE AND ARRANGEMENT WITH SEVERAL SUCH DEVICES

APPAREIL DE COMMUTATION ELECTROMECANIQUE ET SYSTEME COMPORTANT PLUSIEURS APPAREILS DE CE TYPE

(84) Benannte Vertragsstaaten:
**AT CH DE FR GB IT LI**

(30) Priorität: **26.08.1994 DE 4430382**
**30.03.1995 DE 19511795**

(43) Veröffentlichungstag der Anmeldung:
**11.06.1997 Patentblatt 1997/24**

(73) Patentinhaber: **SIEMENS AKTIENGESELLSCHAFT**
**80333 München (DE)**

(72) Erfinder:
• **POHL, Fritz**
**D-91334 Hemhofen (DE)**
• **JAEHNER, Wilfried**
**D-90482 Nürnberg (DE)**

(56) Entgegenhaltungen:
**EP-A- 0 050 417          EP-A- 0 226 530**
**DE-U- 9 406 897          FR-A- 2 201 470**
**FR-A- 2 217 846          FR-A- 2 380 652**
**FR-A- 2 512 993          US-A- 4 611 201**
**US-A- 4 706 073          US-A- 5 051 861**

**Beschreibung**

Die Erfindung bezieht sich auf ein elektromechanisches Schaltgerät mit wenigstens einem beweglichen Kontakt und zugehörigem Antrieb in einem Gerätegehäuse mit Sensormitteln zur berührungslosen Erkennung des Schaltzustandes, insbesondere Magnetfeldsensoren und gegebenenfalls zusätzlichen Sensoren, wie Schallsensoren od. dgl., deren Sensorsignale durch logische Verknüpfung definierte Schaltzustände anzeigen. Daneben bezieht sich die Erfindung auf eine Anordnung mit mehreren derartigen Schaltgeraten.

In elektrischen Verteilungen im industriellen Bereich ist es üblich, den Betriebszustand zu überwachen und speziell die Schaltzustände der Schaltgeräte, wie Ein-/Aus- oder Fehlerauslösung zu erfassen und zu melden. Als Ziel einer modernen Systerztechnik wird gefordert, daß Schaltgeräte mit Überwachungs- und Steuereinrichtungen über einen Datenbus kommunizieren, wozu Betriebsdaten in geeigneter Weise erfaßt werden müssen. Im Falle der Gebäudesystemtechnik sollen z.B. Leitungsschutzschalter mit einer berührungslosen Schaltzustandserkennung ausgerüstet sein, welche im einzelnen den Einschaltzustand, die Überstromauslösung, die Kurzschlußauslösung und/ oder weitere Schaltzustände erfaßt und über einen Datenbus meldet.

Beim Stand der Technik erfolgt eine Schaltzustandserkennung üblicherweise durch mechanisch gekoppelte Schaltelemente, wie Hilfsschalter und/oder Fehlersignalschalter, die beispielsweise am Leitungsschutzschalter angebaut werden, womit der Ein-/Ausschaltzustand und eine mögliche Fehlerauslösung, wie auch Überstrom bzw. Kurzschluß erfaßt werden. Eine solche mechanische Ankopplung der Schaltelemente an die Mechanik des zu überwachenden Schaltgerätes erfolgt zum einen über Öffnungen im Schaltergehäuse, durch die bei Kurzschlüssen elektrisch leitende Gase austreten können, die z.B. elektrische Kriechstrecken erzeugen können, und erhöht zum anderen die Betätigungskraft, die zum Einschalten des Schaltgerätes erforderlich ist. Daneben können an den zusätzlichen Schaltelementen beim kontaktbehafteten Schalten kleiner Ströme und Spannungen, die in der elektronischen Signalverarbeitung üblicherweise auftreten, durch korrosive Effekte Kontaktunsicherheiten entstehen, die eine eindeutige Schaltzustandserkennung verhindern.

Aus der älteren, nicht vorveröffentlichten europäischen Patentanmeldung Nr. 94106336.4 ist ein Verfahren zur Erkennung von Schaltzuständen bekannt, bei der über einen extern an das Schaltergehäuse angelegten Kondensator eine kapazitive Ankopplung an die strom- bzw. spannungsführenden Teile im Schaltgerät realisiert wird. Die über einen kapazitiven Spannungsteiler gemessenen Signale besitzen signifikante Verläufe für den Ein- bzw. Ausschaltzustand des Schaltgerätes und können auch hinsichtlich Überstrom una dgl. ausgewertet werden.

In der US-A-4 706 073 wird ein Schaltgerät beschrieben, bei dem optische und magnetische Sensoren berührungslos die Auslösestellung des Schaltgriffes von der Gerätefrontseite aus erfassen oder aber im Durchlichtverfahren von beiden Seiten des Schaltgriffes. Hier ist ein Teil der Sensorik in der Tür des Schaltschrankes angebracht, so daß die Erfassung der Auslösefunktion nur bei geschlossener Tür erfolgen kann. Schaltzustände, die nicht über den Schaltgriff allein erkennbar sind, können hierbei nicht erfaßt werden und es ist somit keine differenzierte Schaltzustandserkennung möglich. Weiterhin ist in der US-A-4 611 209 ein Schaltgerät beschrieben, bei dem der Schaltgriff einen Permanentmagneten enthält, welcher in einer bestimmten Stellung einen Reedkontakt betätigt. Es kann hier wiederum nur der Zustand "Ein/Aus" sowie "Schalter ausgelöst" erfaßt werden. Bei der offenen Anordnung des Permanentmagneten besteht dabei insbesondere die Gefahr einer Verschmutzung, was in der Praxis zu Fehlanzeigen führen kann.

Aufgabe der Erfindung ist es demgegenüber, daß eine berührungslose Schaltzustandserkennung möglich ist und insbesondere Fehlbeurteilungen ausgeschlossen werden.

Die Aufgabe ist erfindungsgemäß dadurch gelöst, daß die Sensoren innerhalb eines eigenen Sensorgehäuses an geeigneter Stelle angebracht sind, daß zur Überwachung der Schaltzustände das Sensorgehäuse seitlich an das Schaltgerätegehäuse angekoppelt ist und daß weder eine mechanische oder optische Wirkverbindung noch eine elektrische Leitungsverbindung vom Schaltgerätegehäuse und/oder den daran angeschlossenen Netzleitern in das Innere des Sensorgehäuses besteht.

Es hat sich gezeigt, daß zur sensorischen Erfassung der Ein-/ Ausschaltstellung des Schaltgerätes, der Überstromauslösung und des Kontaktverschweißens statische Differential-Hall-effekt-Sensoren geeignet sind. Zur Erfassung der Kurzschlußauslösung ist dagegen ein Reed-Kontakt besser geeignet.

Gemäß der Erfindung kann im Sensorgehäuse ein Schallsensor zur Erfassung des Schaltgeräusches vorhanden sein, dessen Signal gemeinsam mit dem Signal für Überstromauslösung zur Kurzschlußerfassung ausgewertet wird. Vorzugsweise ist der Schallsensor ein Kondensatormikrophon oder ein piezoelektrisches Mikrophon.

Gegenüber einer Kurzschlußerfassung allein durch Detektion des Magnetfeldes liegt der Vorteil der zusätzlichen Schall-Detektion darin, daß der Ort und Abstand der Schallquelle zum Schallsensor das Schallsignal nur gering beeinflussen und daß keine Abschirmeffekte auftreten, wie dies bei Magnetfeldern durch ferromagnetische Bauteile möglich ist. Um ein Kurzschlußereignis zuverlässig und störunempfindlich zu erfassen, wird das mit dem Schallsensor erfaßte Signal für ein Schallereignis und das insbesondere mit einer Differential-Hall-Effekt-Sonde erzeugte Signal für Überstromauslösung vorteilhafterweise über Zeitstufen und ein UND-Glied weiterverarbeitet und es wird nur bei zeitlicher Überlappung bzw. bei geringem Zeitabstand beider Signale ein Kurzschlußereignis angezeigt.

Insbesondere bei mehrpoligen Schaltern kann mit einem zusätzlichen Schallsensor eine sichere Kurzschlußdetektion einer einzelnen oder mehrerer Phasen erfolgen, da die Entfernung des Schallsensors zum Schallereignis des Schaltpoles zwischen etwa 3 bis 10 cm liegt. Dabei wird davon ausgegangen, daß das vom Kurzschluß erzeugte Schallereignis in etwa zeitgleich mit der Auslösung der Phase des Leitungsschutzschalters auftritt, so daß über ein Zeitfenster für die logische UND-Verknüpfung beider Vorgänge insbesondere Störschallquellen unterdrückt werden können.

In vorteilhafter Kombination der erfindungsgemäß vorgeschlagenen Maßnahmen kann eine Anordnung mit mehreren Schaltgeräten geschaffen werden, die in erfinderischer Weise ausgebildet sind, bei dem die Schaltgeräte über einen Datenbus mit einer Überwachungseinrichtung verbunden sind und über diesen unverzögert den Eintritt eines Auslösezustandes melden. Bei dieser Anordnung sind die Schaltgeräte als Verteilerschalter in einem gemeinsamen Verteilerschrank eingebaut und erfolgt die Kurzschlußerfassung an den Verteilerschaltern durch einen oder mehrere fest installierte Schallsensoren an geeigneten Meßorten im Verteilerschrank. In spezifischer Ausbildung können dabei die Schallereignisse nach Schallpegel und Zeitverlauf selektiert als zunächst mögliche Kurzschlußereignisse erfaßt werden und werden als elektrische Signale über den Datenbus der Überwachungseinrichtung unverzögert gemeldet. Die Überwachungseinrichtung löscht dann eine Schallmeldung, wenn nicht innerhalb eines vorgegebenen Zeitfensters eine Auslösemeldung eintrifft und stellt dann eine Kurzschlußauslösung fest, wenn die Schallmeldung und die Auslösemeldung innerhalb des vorgegebenen Zeitfensters eintreffen.Das Zeitfenster für die Koinzidenzprüfung der Auslöse- und der Schallmeldung wird also durch das zuerst eintreffende Signal aktiviert. Durch die entsprechend verteilten Schallsensoren wird das Schallereignis sicher erfaßt und es kann die Überwachungseinrichtung die Kurzschlußauslösung demjenigen Verteilerschalter zuordnen, welcher die Auslösemeldung gesendet hat.

Weitere Einzelheiten und Vorteile der Erfindung ergeben sich aus der nachfolgenden Figurenbeschreibung eines Ausführungsbeispiels anhand der Zeichnung. Es zeigen

Figur 1     das Blockschaltbild einer Einrichtung zur berührungslosen Erkennung des Schaltzustandes eines Schaltgerätes,

Figur 2     ein Prinzipschaltbild der Sensorschaltung,

Figur 3     ein zu Figur 2 alternatives Prinzipschaltbild einer BUS-unabhängigen Sensorschaltung,

Figur 4     einen elektromechanischen Leitungsschutzschalter für die Anordnung spezieller Sensoren an der Gehäuseseitenwand und den notwendigen Anpassungsmaßnahmen für die Sensorbetätigung, und

Figur 5     eine Prinzipskizze des Sensoraufbaus zur Positionsüberwachung der ferromagnetischen Elemente in Figur 4.

Figur 6     eine schematische Darstellung des Zeitverlaufes von Schallsignalen beim Ausschalten,

Figur 7     das Prinzip einer Schaltung zur akustischen Kurzschlußerfassung,

Figur 8     eine elektronische Schaltung gemäß Figur 1, die mit einer akustischen Erkennung der Kurzschlußabschaltung ergänzt ist,

Figur 9     den Aufbau eines dreipoligen Leitungsschutzschalters mit einer seitlich angebauten Überwachungseinrichtung zur berührungslosen Schaltzustandserkennung,

Figur 10     einen Verteilerschrank mit einer Mehrzahl zu überwachender Verteilerschalter und

Figur 11     eine Signalfolge bei einer Anordnung gemäß Figur 10.

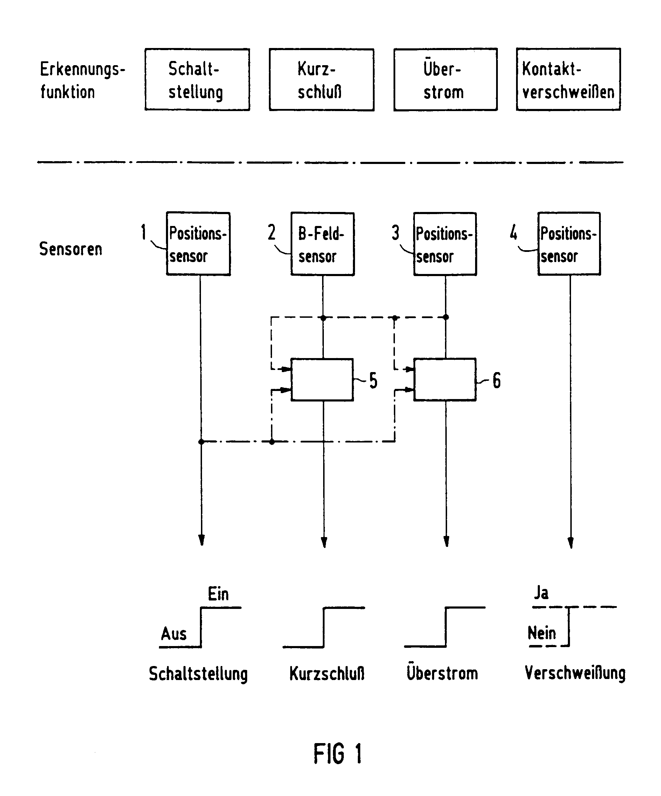

In Figur 1 ist in der ersten Zeile die gewünschte Erkennungsfunktion dargestellt. Dies sind im einzelnen die Schaltstellung, ein möglicher Kurzschluß und/oder ein Überstrom, sowie eine mögliche Kontaktverschweißung. Darunter sind die zugehörigen Sensoren aufgeführt. Im einzelnen sind ein Positionssensor 1, ein B-Feldsensor 2 sowie weitere Positionssensoren 3 und 4 vorhanden. Die Sensoren 2 und 3 sind über elektronische Speicher 5 und 6 auf die Ausgänge gekoppelt, wobei Rückkopplungen für das Rücksetzen der elekronischen Speicher sowie für eine Rücksetzsperre vorhanden sind.

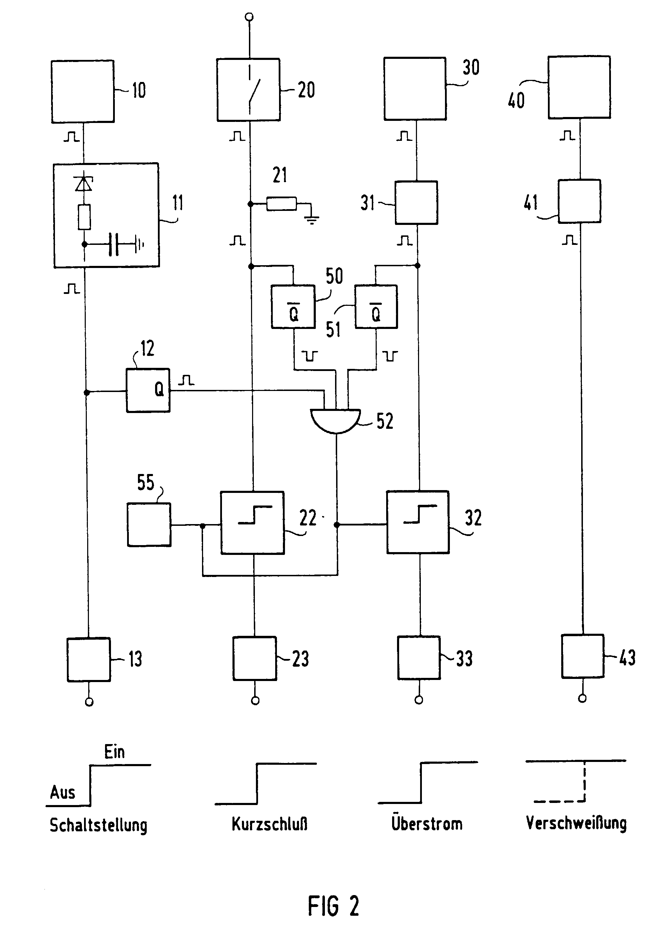

In Figur 2 ist als Positionssensor 1, 3 und 4 der Figur 1 speziell eine statische Differential-Halleffekt-Sonde 10, 30 und 40 vorgesehen. Als B-Feldsensor dient dagegen speziell ein Reed-Kontakt 20.

Die sensorische Erfassung der Schaltstellung (Ein-/Aus) des Schaltgerätes erfolgt mittels des statischen Differential-Halleffekt-Sensors 10, dessen Ausgangsspannung über die Stellung des ferromagnetischen Antriebsbügels "hoch" bzw. "tief" geschaltet wird. Diese Ausgangsspannung stellt sich z.B. auch nach Ausschalten und Wiedereinschalten der Elektronikversorgungsspannung eindeutig ein, da der ferromagnetische Antriebsbügel nach entsprechender Vorgabe den räumlichen Meßbereich des Sensors 10 nicht verläßt. Gleiches gilt für den Verschweißsensor 40, welcher die Position der Kontaktwelle an einem auf der Welle befestigten kleinen Eisenzylinder überwacht. Zur Erfassung der Überstromauslösung wird wiederum ein statischer Differential-Halleffekt-Sensor 30 eingesetzt. Der Sensor 30 mißt hier den Positionswechsel eines Eisenstäbchens, welches am Verklinkungsende des Klinkenhebels angebracht ist. Beispielsweise kann ein solches Eisenstäbchen die Länge 4 mm und den Durchmesser 4 mm haben. Bei der Entklinkung ist der Weg des Eisenstäbchens größer als der räumliche Meßbereich des Sensors, so daß als eindeutiges Auslösesignal die Signalflanke (z.B. "hoch" → "tief") am Ausgang des Differential-Halleffekt-Sensors gemessen werden kann. Mit der Signalflanke wird ein elektronisches Gedächtnis gesetzt, das die Überstromauslösung solange anzeigt, bis das Gedächtnis zurückgesetzt wird.

Die Erfassung der Kurzschlußauslösung erfolgt gemäß Figur 2 zweckmäßigerweise durch den Reed-Kontakt 20. Dieser schaltet bei ausreichend hohem Magnetfeld unabhängig von dessen Polarität. Messungen an einem Reed-Kontakt mit robuster Ausführung ergaben das Einschalten bei einer magnetischen Induktion von 3 bis 4 mT. Magnetfelder dieser Höhe werden z.B. beim Leitungsschutzschalter als Streufeld der Auslösespule bei einer Amperewindungszahl von beispielsweise 1200 AW erzeugt. Bei hohen Kurzschlußströmen erreicht der untersuchte Reed-Kontakt eine Einschalt-Verzugszeit von etwa 0,2 ms. Nach Abklingen des Kurzschlußstromes schaltet der Reed-Kontakt 20 wieder aus. Mit dem Schaltsignal des Reed-Kontaktes 20 wird ein elektronisches Gedächtnis gesetzt, das bis zu seinem Zurücksetzen die Kurzschlußauslösung speichert.

Alternativ zum Reed-Kontakt 20 kann ein möglicher Kurzschluß auch durch andere magnetfeldempfindliche Sonden, wie Hall-Effekt-IC's, beispielsweise "Hall effect switch", überwacht und mit einer Auswertelogik weiterverarbeitet werden.

Der Vorgang des Setzens bzw. Zurücksetzens der elektronischen Gedächtnisse muß bei Kurzschlußdraufschaltungen in spezifischer Weise gesteuert werden. So kann bei einer Handeinschaltung eines Leitungsschutzschalters eine Kurzschlußausschaltung erfolgen, obwohl der Drehknauf in Einschaltposition gebracht wird; dies wird als sogenannte Freiauslösung bezeichnet. Durch logische Und-Verknüpfung des Einschaltsignals mit den Signalen "keine-Überstromauslösung" und "keine-Kurzschlußauslösung" wird das Rücksetzen der elektronischen Gedächtnisse unmittelbar während der Überstrom- oder Kurzschlußauslösung blockiert.

Für letzteren Zweck sind in Figur 2 monostabile Kippstufen 12, 50 und 51 zur Einstellung der Impulsdauer vorhanden, deren nichtinvertierende Ausgänge Q bzw. deren invertierende Ausgänge $\overline{Q}$ an die Eingänge eines Und-Schaltgliedes 52 angeschlossen sind, dessen Ausgang die Rücksetz-Eingänge der Flipflops 22 und 32 ansteuert. Somit wird das Rücksetzen und die Rücksetzsperre gebildet.

Im einzelnen besteht das Prinzipschaltbild zur Schaltzustandserkennung in Figur 2 aus Sensoren 10, 20, 30 und 40 zur Erfassung der verschiedenen Zustände, aus Impulsformern 11, 31 und 41 bestehend aus einer Reihenschaltung einer Zener-Diode zur Korrektur der Offset-Spannung und einem RC-Tiefpaß, aus einem Lastwiderstand 21 für den Reedkontakt 20, sowie aus einer Speicherschaltung für die transienten Signale des Kurzschlußsensors 20 und des Überstromsensors 30, wobei die Speicherschaltung zwei Flipflop 22 und 32 enthält, deren gespeicherte Signalzustände durch die Rücksetzschaltung, bestehend aus den monostabilen Kippstufen 12, 50 und 51, dem Und-Schaltglied 52 und dem Entstörglied 55 zeitgesteuert zurückgesetzt werden. Die Treiberstufen 13, 23, 33 und 43 dienen zur Pegelanpassung der Schaltzustandssignale für die weitere Signalverarbeitung, wie optische Anzeige, Busankopplung und dergleichen.

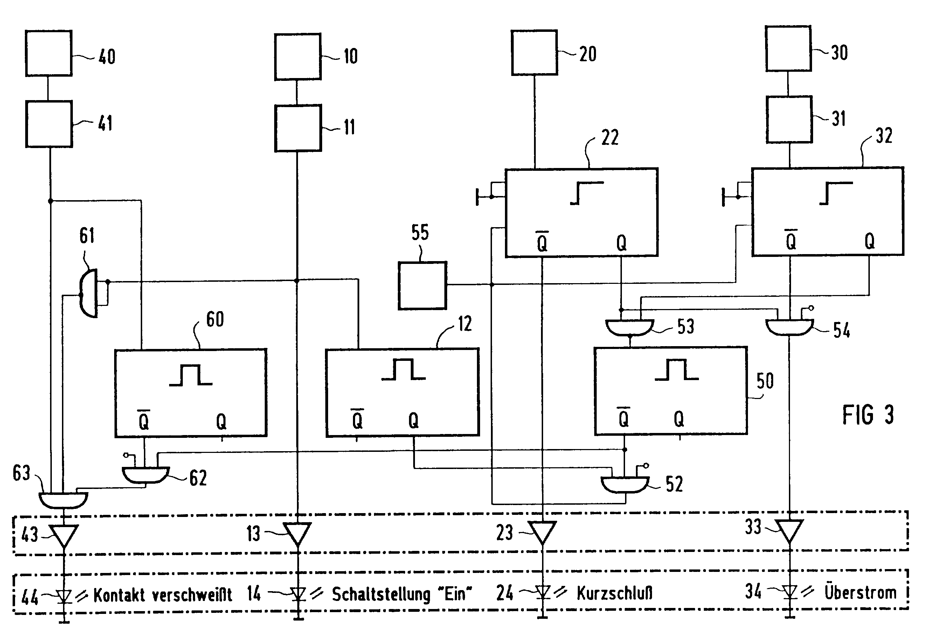

Das Prinzipschaltbild nach Figur 3 zeigt eine Ausführungsform einer BUS-unabhängigen Sensorschaltung zur Erkennung der Schaltzustände. Im Unterschied zur Schaltung nach Figur 2 wird in der Schaltung nach Figur 3 die Auswertung und Anzeige der Schaltzustände selbst vorgenommen. Das Prinzipschaltbild nach Figur 3 enthält daher zusätzliche logische Verknüpfungen für die Auswertung und Anzeige der Schaltzustände, wie Schaltstellung Ein/Aus, Kurzschluß, Überstrom und Kontaktverschweißung. So sind die Ausgangssignale der Flipflop's 22 und 32 durch das Und-Schaltglied 54 miteinander verknüpft, um im Kurzschlußfall die Überstromanzeige zu sperren und nur die Kurzschlußanzeige zu aktivieren. Die Rücksetzschaltung wird aus den beiden monostabilen Kippstufen 12 und 50, dem Und-Schaltglied 52, dem Nand-Schaltglied 53 sowie dem Entstörglied 55 gebildet. Eine Kontaktverschweißung wird als solche erkannt, wenn in der Schaltstellung 'Aus' des Schaltgerätes die Kontaktwelle in der Einschaltstellung bleibt. Dazu erfolgt eine zeitlich gesteuerte Verknüpfung der beiden Sensorsignale 'Schaltstellung' und 'Kontaktwelle' durch die monostabilen Kippstufen 12 und 60, dem Nand-Schaltglied 61 und den Und-Schaltgliedern 62 und 63. Die optische Anzeige erfolgt schließlich über Anzeigenelemente 12, 24, 34 und 44, z.B. Lumineszenzdioden.

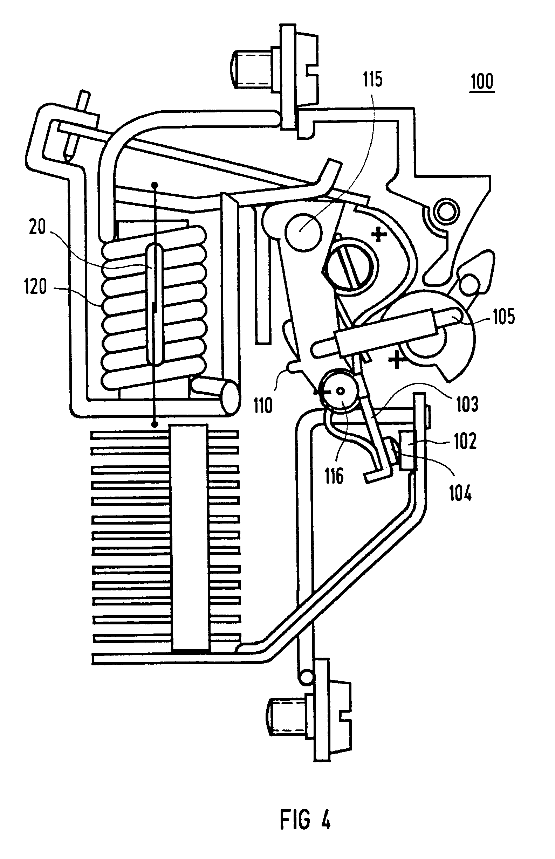

In der Figur 4 bedeuten 100 ein konventionelles Schaltgerät, beispielsweise einen Leitungsschutzschalter. Wesentlich sind bei einem solchen Schalter 100 der Festkontakt 102 und der auf einem beweglichen Kontaktträger 103 angeordnete Bewegkontakt 104. Die mechanische Kopplung des beweglichen Kontaktträgers an das Schaltschloß erfolgt durch einen ferromagnetischen Antriebsbügel 105.

Auf die Mechanik sowie den Antrieb eines solchen bekannten Schalters wird nicht im einzelnen eingegangen. Lediglich pauschal werden die mechanischen Antriebselemente mit 110 und der Magnetantrieb mit 120 bezeichnet.

Für den vorliegenden Anwendungszweck ist wichtig, daß der Antriebsbügel aus ferromagnetischem Material besteht. Der Antriebsbügel kann in seiner Dicke teilweise auf z.B. 2,5 mm verstärkt sein, um seinen Einfluß auf den Magnetfeldverlauf zu erhöhen. Weiterhin sind am Klinkenhebel und an der Kontaktachse ferromagnetische Stäbchen 115 und 116 zur Positionsüberwachung angebracht. Die Stellung der Elemente 105, 115, 116 aus ferromagnetischem Material wird durch die Halleffekt-Sonden 10, 30 und 40 erfaßt. Weiterhin ist neben dem Magnetantrieb 120 der Reed-Kontakt 20 zur Erfassung von stromflußbedingten Magnetfeldern angeordnet.

Die Sensoren 10, 20, 30 und 40 sind im Ausführungsbeispiel der Figur 4 außerhalb des Schaltergehäuses angebracht. Die Projektion der Sondenpositionen auf die Zeichenebene ist durch Kreuze bzw. durch ein stilisiertes Reed-Kontaktsymbol verdeutlicht. Gegebenenfalls können die Sonden auch teilweise innerhalb des Gehäuses bzw. auf der Gehäusewand angeordnet sein.

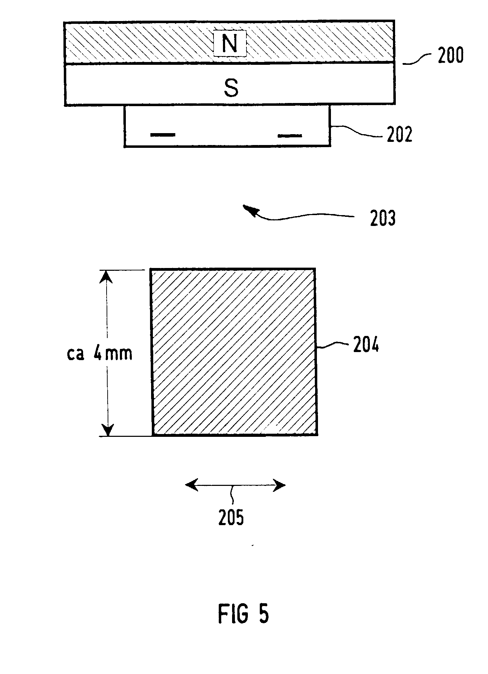

In Figur 5 ist eine schematische Meßanordnung zur berührungslosen Positionsbestimmung an einem der ferromagnetischen Stäbchen der Figur 4 dargestellt. Hierzu befindet sich die Differential-Hall-Effekt-Sonde 202 in einem vorgegebenen Abstand, der als Luftspalt-Abstand mit 203 charakterisiert ist, zu einem ferromagnetischen Element 204. Auf der dem Luftspalt abgewandten Seite der Sonde 202 befindet sich ein Permanentmagnet 200, dessen Magnetfeld die Sonde in etwa senkrecht durchdringt und in den Luftspalt eintritt. Bei der Bewegung des ferromagnetischen Elementes in Verschiebungsrichtung 205 werden die in das Element eintretenden Magnetfeldlinien mit verschoben. Die dabei resultierende Feldverzerrung am Ort der beiden Hall-Bereiche führt zu einem Differenzausgangssignal der Differential-Halleffekt-Sonde 202.

Alternativ zur Positionsbestimmung ferromagnetischer Elemente kann die Differential-Halleffekt-Sonde direkt die Position eines kleinen Hartmagnetelementes bestimmen. In diesem Fall entfällt der in Figur 5 vorhandene Permanentmagnet 200 auf der Rückseite der Sonde 202.

Mit der in Figur 4 und 5 angegebenen Anordnung der Sensoren ist eine Sensorüberwachung der vier Schaltzustände Ein-/Aus, Überstromauslösung, Kurzschlußauslösung und Kontaktverschweißung zuverlässig und unempfindlich gegen Störeinflüsse. Dafür können folgende Punkte angeführt werden:

- Das Ein-/Aussignal und das Verschweißsignal werden permanent angezeigt.
- Das Überstrom-Auslösesignal wird bei mäßiger Stromhöhe erfaßt und gespeichert, beispielsweise $i \leq 5 \cdot I_N$
- Das Kurzschlußauslösesignal des Reed-Kontaktes 20 besteht bis zum Abklingen des Stromes auf kleine Stromwerte, so daß mit einer sicheren Erkennung und Speicherung zu rechnen ist. Beispielsweise schließt der Reed-Kontakt 20 im Streufeld der Magnetspule, wenn der im Schaltgerät mit Auslösecharakteristik B16 fließende elektrische Strom 130 A überschreitet, und öffnet, wenn der elektrische Strom 40 A unterschreitet.

Um die Beeinflussung des Reed-Kontaktes 20 durch magnetische Fremdfelder, beispielsweise von benachbarten Schaltgeraten, zu vermeiden, kann der Reed-Kontakt auf der dem überwachten Schaltgerät abgewandten Seite mit einer magnetischen Abschirmung versehen werden.

Vorstehend wurde eine Einrichtung zur berührungslosen Schaltzustandserkennung an spezifischen Leitungsschutzschaltern im einzelnen beschrieben. Die Erfassung der Schaltzustände "EIN/AUS", "Überstromauslösung" und "Kontaktverschweißung" erfolgt dort mit Differential-Hall-Effekt-Sonden an ferromagnetischen Geberelementen, während die Kurzschlußerfassung über das magnetische Streufeld des Magnetauslösers mit einem Reed-Kontakt erfolgt. Eine solche Einrichtung läßt sich als kompaktes Erkennungsmodul aufbauen, das in einem eigenen Gehäuse mit beispielsweise 1-Teilungseinheit untergebracht und an den zu überwachenden Leitungsschutzschalter seitlich angebaut wird.

Da magnetische Felder mit wachsender Entfernung vom Ort ihrer Erzeugung abnehmen, insbesondere mit 1/r, ist es allerdings nicht ohne weiteres möglich, mit dem gleichen Erkennungsmodul die Schaltzustände an ein- und mehrpoligen Leitungsschutzschaltern zu erfassen. Wegen der mechanischen Kopplung der Schaltpole eines mehrpoligen Leitungsschutzschalters über den Schaltgriff und die Auslösewelle gilt letzteres allerdings nicht für die Schaltzustände "EIN/AUS" und "Überstromauslösung", sondern nur für die beiden weiteren Schaltzustände "Kurzschlußauslösung" und "Kontaktverschweißung". Insbesondere bei der Erkennung von Kurzschlüssen muß aber bei mehrpoligen Schaltern, unabhängig davon welche Phasen den Kurzschlußstrom führen, das betroffene Schaltgerät sicher bestimmt werden können.

Bei üblichen Leitungsschutzschaltern hängt der zur Kurzschlußauslösung erforderliche Mindeststrom von der spezifischen Auslösecharakteristik des Schalters und von dessen Nennstrom ab. Beispielsweise beträgt dieser Mindeststrom bei einem 16 A-Leitungsschutzschalter mit der genormten Auslösecharakteristik B, d. h. 5facher Auslösestrom, etwa $\hat{I} \sim 100$ A.

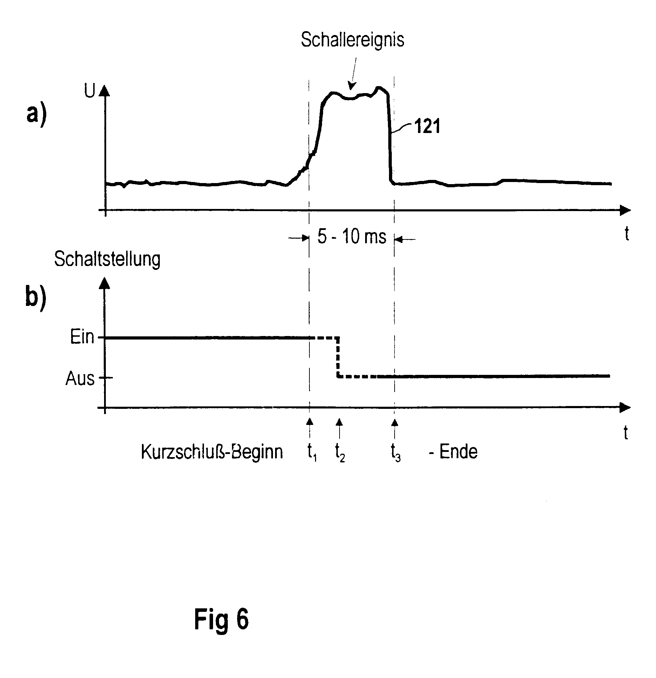

Bei einem solchen Strom ist das vom Abschaltlichtbogen erzeugte Schaltgeräusch deutlich vernehmbar und kann daher mit einem Mikrophon detektiert werden. Mit wachsender Höhe des Kurzschlußstromes wird ein solches Schaltgeräusch so laut, daß mit der sicheren Detektion eines derartigen Kurzschlußereignisses zu rechnen ist. Dafür wird im Gehäuse der Schaltzustandserkennung ein Mikrophon eingebaut, wobei die Entfernung zum Schallereignis des Schaltpoles je nach Entfernung des Poles bei einem seitlich angekoppelten, mehrpoligen Leitungsschalter etwa 3 bis 10 cm beträgt. Letzteres wird anhand Figur 6 verdeutlicht.

In Figur 6a ist die Mikrophonspannung U über der Zeit t aufgetragen. Aus einem üblichen Rauschen tritt beim Ausschaltvorgang ein deutliches Schallereignis auf, das durch den Graph 121 verdeutlicht wird. Beispielsweise hat ein solches Schallereignis eine zeitliche Breite von 5 bis 10 ms.

In der Figur 6b ist verdeutlicht, daß bei Auftreten des Schallereignisses zum Zeitpunkt $t_1$ ein Kurzschluß beginnt, der zum Zeitpunkt $t_3$ endet. In diesem Beispiel wird das Schaltschloß zum Zeitpunkt $t_2$ durch den nichtverzögerten Auslöser in die Ausschaltstellung gebracht.

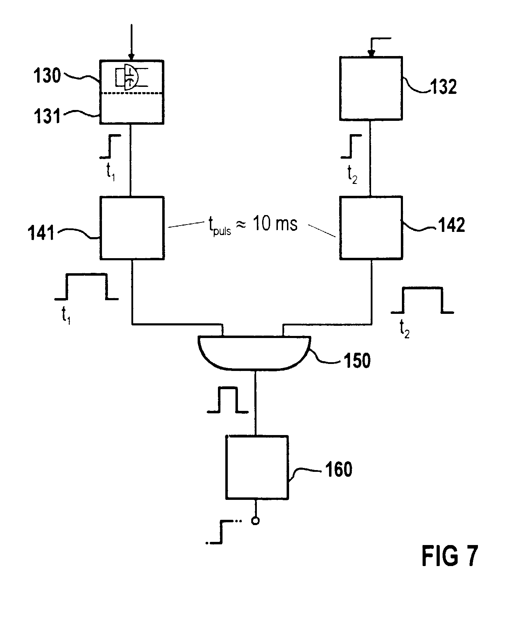

In Figur 7 ist ein Mikrophon mit 130, der dazugehörige Schwellwertschalter mit 131 und eine Differential-Hall-Effekt-Sonde mit 132 bezeichnet. Beiden nachgeschaltet sind Zeitstufen 141 und 142, wobei die Zeitstufe 141 zum Zeitpunkt $t_1$ und die Zeitstufe 142 zum Zeitpunkt $t_2$ durch das zugehörige Sensorsignal angesteuert wird. Es lassen sich so gegeneinander verschobene Zeitimpulse $t_1$ und $t_2$ auf den Ausgangsleitungen erzeugen, was in Figur 3 verdeutlicht ist. Beide Ausgangssignale gelangen dann auf eine UND-Stufe 150 mit nachgeschaltetem Flip-Flop 160. Diese Schaltung bewirkt, daß bei zeitlicher Überlappung beider Sensorsignale ein Kurzschlußereignis angezeigt wird.

Aus der zeitlichen Koinzidenz des Schallereignisses und des Auslösevorganges wird also bei einer prinzipiellen Anordnung gemäß Figur 7 auf eine Kurzschlußschaltung des überwachten Leitungsschutzschalters geschlossen.

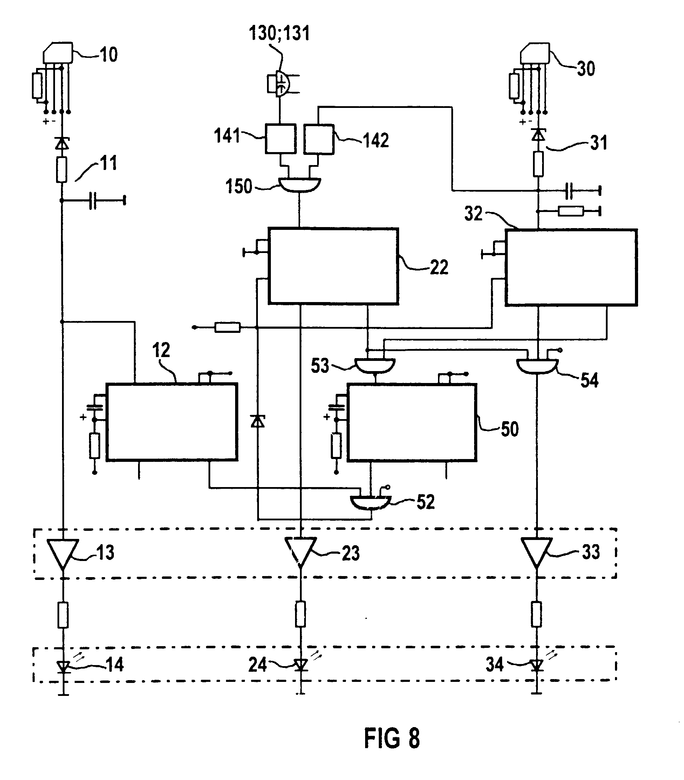

In Figur 8 ist die Schaltung gemäß Figur 1 derart abgewandelt, daß statt des Sensors 20 für den Kurzschluß eine Anordnung entsprechend der prinzipiellen Darstellung gemäß Figur 3 mit einem akustischen Sensor 130, 131 und zwei monostabilen Multivibratoren 141 und 142 vorhanden sind, deren Ausgangssignale über das UND-Schaltglied 150 das Flip-Flop 22 entsprechend Figur 1 ansteuern.

Die anhand Figur 8 beschriebene Einrichtung zur Schaltzustandserkennung eignet sich gleichermaßen für die Überwachung ein- und/oder mehrpoliger Leitungsschutzschalter.

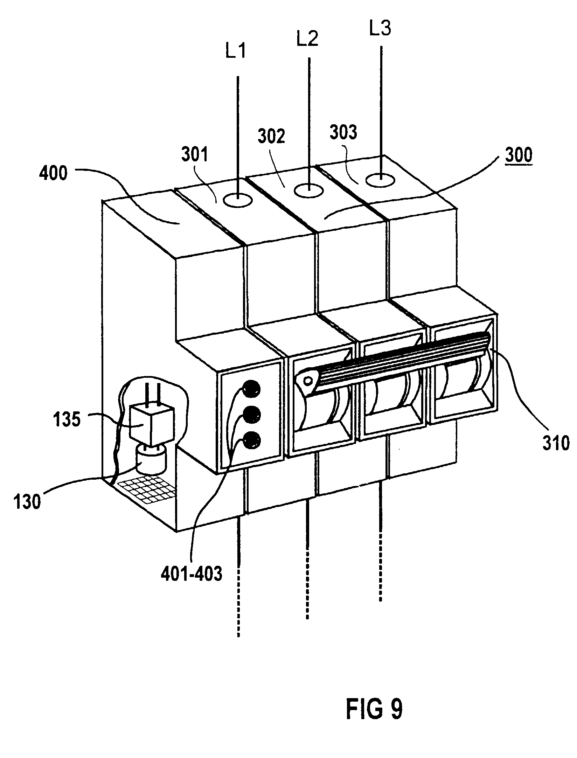

Aus Figur 9 ergibt sich die räumliche Zuordnung zwischen einem dreipoligen Leitungsschutzschalter und einer Einrichtung zur berührungslosen Schaltzustandserkennung. Dargestellt ist das gemeinsame Gehäuse 300, das aus parallelen Teilgehäusen 301, 302, 303 für die einzelnen Phasen L1, L2, L3 besteht, wobei eine gemeinsame Griffleiste 310 vorhanden ist. Das entsprechend Figur 2 und 3 arbeitende Erkennungsmodul ist als separates Gehäuse 400 seitlich angeflanscht. und hat in der Verlängerung der Griffleiste 110 drei Dioden 401 bis 403 als optische Schaltzustandsanzeigen.

Die jeweiligen Schaltzustände der drei Schaltpole und zwar "EIN/AUS" bzw. "Überstromauslösung" sind über die gemeinsame Griffleiste bzw. die Auslösewelle mechanisch miteinander gekoppelt und werden durch Magnetfeldsensoren überwacht, während "Kurzschlußauslösungen" in einer oder in mehreren Phasen durch den Schallsensor 130 mit nachgeschaltetem NF-Verstärker 135, trotz unterschiedlicher Entfernung zwischen den Schallereignissen und dem Sensor, erfaßt werden.

Mit der anhand der Figuren 6 bis 9 beschriebenen Einrichtung ist nunmehr bei mehrpoligen Leitungsschutzschaltern eine sichere Diskriminierung der Kurzschlüsse hinsichtlich des betroffenen Schalters möglich.

In einer Verteilung mit mehreren Leitungsschutzschaltern, die als Verteilerschalter in einem Verteilerschrank installiert sind, kann es vorteilhaft sein, die Kurzschlußerfassung durch einen oder mehrere Schallsensoren vorzunehmen und dadurch den Sensoraufwand zu reduzieren. Voraussetzung hierfür ist, daß jedes der zu überwachenden Schaltgeräte beim Auslösevorgang eine unverzögerte Meldung an eine zentrale Überwachungseinheit abgibt. Dies ist insbesondere der Fall, wenn die Schaltgeräte über einen Datenbus mit einer Überwachungseinrichtung kommunizieren.

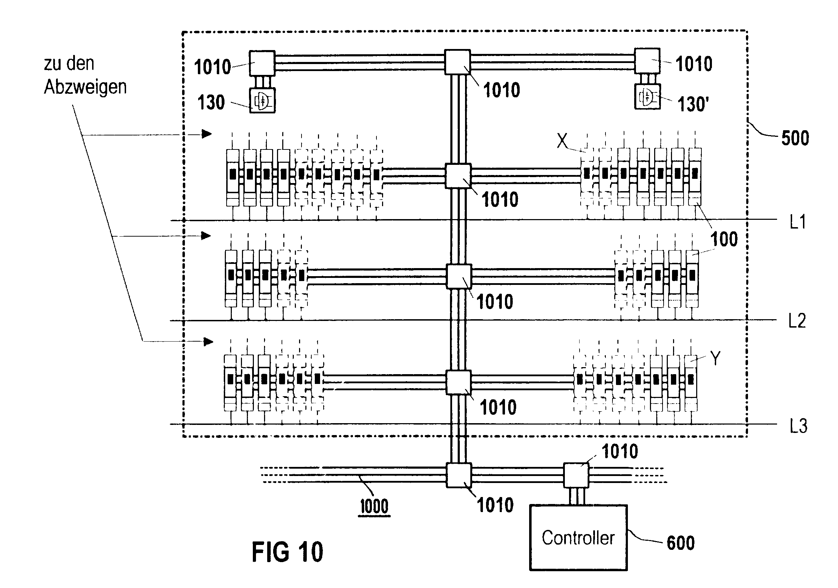

In Figur 10 ist der Aufbau eines Verteilerschrankes 500 schematisch dargestellt, bei der die einzelnen installierten Schaltgeräte 100, 100', ... ihren Schaltzustand, wie insbesondere Ein/Aus und/oder Auslösung, über einen Datenbus 1000 mit zugehörigen Bus-Koppeleinrichtungen 1010 an einen Controller 600 als Überwachungseinrichtung melden und dieser zusätzlich von beispielsweise zwei Schallsensoren 130 bzw. 130' Meldungen erhält, sobald im Verteilerschrank 500 charakteristische, akustische Signale auftreten.

Die Selektierung der akustischen Signale hinsichtlich Schallpegel und Zeitverlauf des Schallsignals durch die elektronische Signalverarbeitung hat den Sinn, das Schaltgeräusch von Untergrund- und Störgeräuschen zu trennen. Damit wird erreicht, daß der Schallsensor 130 bzw. 130' mit ausreichender Wahrscheinlichkeit nur auf Schaltgeräusche anspricht, die von Kurzschlußabschaltungen herrühren und z.B. eine Zeitdauer von 5 bis 10 ms besitzen.

Sowohl die Schaltzustandsmeldungen und die Schallmeldungen werden über den Datenbus 1000 dem Controller 600 unverzögert gemeldet, und der Controller 600 entscheidet über ein Zeitfenster, ob beide Signale vom gleichen Ereignis, nämlich der Kurzschlußabschaltung, stammen oder unabhängig voneinander entstanden sind. Das Zeitfenster wird hierzu durch das vom Controller 600 zuerst empfangene Signal aktiviert und nach einer vorgegebenen Zeitdauer T wieder geschlossen. Empfängt der Controller 600 innerhalb des Zeitfensters auch das andere Signal, so wird mit dem zeitlichen Zusammentreffen des Auslöse- und des Schallsignals auf eine Kurzschlußabschaltung geschlossen.

Mit der Adresse des sendenden Schalters, beispielsweise Schalter X in Figur 10, wird diesem das Kurzschlußereignis zugeordnet, womit die Schaltzustandserkennung "Kurzschlußauslösung" für jeden individuellen Verteilerschalter innerhalb des Verteilerschranks 500 realisiert ist.

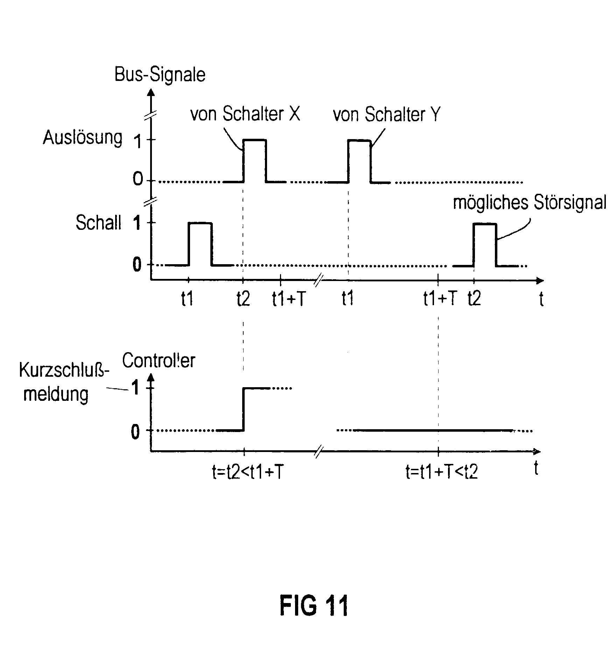

Figur 11 zeigt eine Signalfolge der vom Controller 600 über den Datenbus empfangenen Meldungen eines Auslöse- und eines Schallereignisses: Fällt das zweite Signal innerhalb des Zeitfensters, das vom ersten Signal getriggert wurde, so erkennt der Controller 600 dies als eine Kurzschlußauslösung und verknüpft diese mit der Adresse des meldenden Schalters, beispielsweise des Schalters X. Fällt das zweite Signal jedoch außerhalb des vom ersten Signal, und zwar vom Schalter Y getriggerten Zeitfensters, so wird die Auslösemeldung vom Controller 600 nicht als Kurzschlußauslösung, sondern als Überstromauslösung des meldenden Schalters Y bewertet. Die Schallmeldung wird in diesem Fall vom Controller 600 als Störsignal bewertet und gelöscht.

## Patentansprüche

1. Elektromechanisches Schaltgerät mit wenigstens einem beweglichen Kontakt und zugehörigen Antrieb in einem Gerätegehäuse (100, 300) mit Sensormitteln (10, 20, 30, 40, 130) zur berührungslosen Erkennung des Schaltzustandes, insbesondere Magnetfeldsensoren (10, 20, 30, 40) und gegebenenfalls zusätzlichen Sensoren (130), wie Schallsensoren od. dgl., deren Sensorsignale durch logische Verknüpfung definierte Schaltzustände anzeigen, **dadurch gekennzeichnet**, daß die Sensoren (10, 20, 30, 40, 130) innerhalb eines eigenen Sensorgehäuses (400) an geeigneter Stelle angebracht sind, daß zur Überwachung der Schaltzustände das Sensorgehäuse (400) seitlich an das Schaltgerätegehäuse (100, 300) angekoppelt ist und daß weder eine mechanische oder optische Wirkverbindung noch eine elektrische Leitungsverbindung vom Schaltgerätgehäuse (100, 300) und/oder den daran angeschlossenen Netzleitern in das Innere des Sensorgehäuses (400) besteht.

2. Schaltgerät nach Anspruch 1, **dadurch gekennzeichnet,** daß als Sensormittel zur Erkennung des Ein-/Ausschaltzustandes, einer Überstromauslösung und einer Kontaktverschweißung im Sensorgehäuse (400) Sensoren (10, 30, 40) zur Messung von positionsabhängigen Magnetfeldern von Permanentmagneten vorhanden sind.

3. Schaltgerät nach Anspruch 1, **dadurch gekennzeichnet,** daß als Sensormittel für die Kurzschlußauslösung im Sensorgehäuse (400) ein Sensor zur Messung des Magnetfeldes des im Schaltgerät fließenden Stromes vorhanden ist.

4. Schaltgerät nach Anspruch 1, **dadurch gekennzeichnet,** daß als Sensormittel zur Erfassung des Schaltgeräusches im Sensorgehäuse (400) ein Schallsensor vorhanden ist, dessen Signal gemeinsam mit dem Signal für Überstromauslösung zur Kurzschlußerfassung ausgewertet wird.

5. Schaltgerät nach Anspruch 2, **dadurch gekennzeichnet,** daß die Erfassung der Ein-/Aus-Schaltstellung mittels eines statischen Differential-Halleffekt-Sensors (10) erfolgt.

6. Schaltgerät nach Anspruch 2, **dadurch gekennzeichnet,** daß die Erfassung der Überstromauslösung mittels eines statischen Differential-Hall-Effekt-Sensors (30) erfolgt.

7. Schaltgerät nach Anspruch 4, **dadurch gekennzeichnet,** daß dem Sensor (30) Speichermittel zur Realisierung eines "elektronischen Gedächtnisses" zugeordnet sind.

8. Schaltgerät nach Anspruch 5, wobei der bewegliche Kontakt auf einem um eine Drehachse schwenkbaren Kontaktträger angeordnet ist, **dadurch gekennzeichnet,** daß der Halleffekt-Sensor (40) als Magnetfeldsensor zur sensorischen Erfassung der Position der Drehachse des Kontaktträgers (103) dient.

9. Schaltgerät nach Anspruch 7, **dadurch gekennzeichnet,** daß die Erfassung einer Kontaktverschweißung durch logische Verknüpfung der Signale "Schaltstellung" des Sensors (10) und "Kontaktwelle" des Sensors (40) erfolgt.

10. Schaltgerät nach einem der Ansprüche 2 bis 7, **dadurch gekennzeichnet,** daß die Positionsabhangigkeit der von den Sensoren (10, 30, 40) gemessenen Magnetfelder von Permanentmagneten durch die zu überwachenden Komponenten der Schaltermechanik erzeugt wird.

11. Schaltgerät nach Anspruch 9, mit einem Antriebsbügel als Komponente der Antriebsmechanik, **dadurch gekennzeichnet,** daß die zu überwachende Komponente der Schaltermechanik, beispielsweise der Antriebsbügel (105), aus ferromagnetischem Material besteht.

12. Schaltgerät nach Anspruch 9, mit einer Kontaktwelle und einem Klinkenhebel als Komponenten der Antriebsmechanik, **dadurch gekennzeichnet,** daß die zu überwachende Komponente der Schaltermechanik , beispielsweise die Kontaktwelle (116) und Klinkenhebel (115), ein ferromagnetisches Materialstück trägt.

13. Schaltgerät nach Anspruch 11, **dadurch gekennzeichnet,** daß das ferromagnetische Materialstück als Eisenstäbchen bzw. -hohlzylinder ausgebildet ist und beispielsweise eine Länge von ca. 4 mm und eine Dicke von ca. 4 mm hat.

14. Schaltgerät nach Anspruch 3, **dadurch gekennzeichnet,** daß zur Erfassung der Kurzschlußauslösung ein Reed-Kontakt (20) vorhanden ist.

15. Schaltgerät nach Anspruch 14, **dadurch gekennzeichnet,** daß dem Reed-Kontakt (20) Speichermittel zur Realisierung eines "elektronischen Gedächtnisses" zugeordnet sind.

16. Schaltgerät nach Anspruch 15, **dadurch gekennzeichnet,** daß der Reed-Kontakt (20) durch eine ferromagnetische Abschirmung gegen magnetische Fremd-Störfelder abgeschirmt ist.

17. Schaltgerät nach Anspruch 4, **dadurch gekennzeichnet,** daß das mit dem Schallsensor (130) erfaßte Signal für ein Schallereignis und das mit einer Differential-Hall-Effekt-Sonde erzeugte Signal für Überstromauslösung über Zeitstufen (141,142) auf ein UND-Glied (150) gegeben wird und bei zeitlicher Überlappung beider Signale ein Kurzschlußereignis angezeigt wird.

18. Schaltgerät nach Anspruch 17, **dadurch gekennzeichnet,** daß der Schallsensor (130) ein Konden-satormikrophon oder ein piezoelektrisches Mikro-phon ist, das außerhalb des Gerätegehäuses (100) angeordnet ist.

19. Schaltgerät nach einem der vorhergehenden Ansprüche, **gekennzeichnet** durch eine mehrpolige Ausführung.

20. Anordnung mit mehreren Schaltgeräten nach einem der vorhergehenden Ansprüche mit folgenden Merkmalen:

- die Erkennung des Ein-/Ausschaltzustandes und des Auslösezustandes, insbesondere Überstrom- oder Kurzschlußauslösung, der Schaltgeräte (100, 100' ...) erfolgt durch Sensoren (10, 20, 30, 40))
- die Schaltgeräte (100, 100' ...) sind über einen Datenbus (1000) mit einer Überwachungseinrichtung (600) verbunden und melden dieser unverzögert den Eintritt eines Auslösezustandes
- die Schaltgeräte (100, 100' ...) sind als Vertei-lerschalter in einem gemeinsamen Verteiler-schrank (500) eingebaut
- die Kurzschlußerfassung an den Verteilerschaltern (100, 100' ...) erfolgt durch einen oder mehrere festinstallierte Schallsensoren (130) an geeigneten Meßorten im Verteilerschrank (500)
- die Schallereignisse können nach Schallpegel und Zeitverlauf selektiert als mögliche Kurzschlußereignisse erfaßt werden und werden als elektrische Signale über den Datenbus (1000) der Überwachungseinrichtung (600) unverzögert gemeldet
- die Überwachungseinrichtung (600) löscht eine Schallmeldung, wenn nicht innerhalb eines vorgegebenen Zeit fensters eine Auslösemeldung eintrifft
- die Überwachungseinrichtung (600) stellt eine Kurzschlußauslösung fest, wenn die Schallmeldung und die Auslösemeldung innerhalb des vorgegebenen Zeit fensters eintreffen und ordnet die Kurzschlußauslösung demjenigen Verteilerschalter (100, 100' ...) zu, welcher die Auslösemeldung gesendet hat.

**Claims**

1. An electromechanical switchgear with at least one movable contact and associated drive in a switchgear housing (100, 300) with sensor means (10, 20, 30, 40, 130) for non-contacting identification of the switching state, in particular magnetic field sensors (10, 20, 30, 40) and optionally additional sensors (130) such as acoustic sensors or the like, the sensor signals of which indicate switching states defined by logic functions, characterised in that the sensors (10, 20, 30, 40, 130) are arranged inside a separate sensor housing (400) at a suitable location, that for the monitoring of the switching states the sensor housing (400) is laterally coupled to the switchgear housing (100, 300) and that neither a mechanical or optical active connection nor an electrical line connection exists from the switchgear housing (100, 300) and/or the power conductors connected thereto into the interior of the sensor housing (400).

2. A switchgear according to Claim 1, characterised in that sensors (10, 30, 40) for measuring position-dependent magnetic fields of permanent magnets are provided as sensor means for identifying the on/off switching state, overcurrent tripping and contact fusion in the sensor housing (400).

3. A switchgear according to Claim 1, characterised in that a sensor for measuring the magnetic field of the current flowing in the switchgear is provided as sensor means for short-circuit tripping in the sensor housing (400).

4. A switchgear according to Claim 1, characterised in that an acoustic sensor is provided as sensor means for detecting the switching noise in the sensor housing (400), the signal from said acoustic sensor being analyzed together with the signal for overcurrent tripping for the purpose of short-circuit identification.

5. A switchgear according to Claim 2, characterised in that the detection of the on/off switching position takes place using a static differential Hall effect sensor (10).

6. A switchgear according to Claim 2, characterised in that the detection of the overcurrent tripping takes place using a static differential Hall effect sensor (30).

7. A switchgear according to Claim 4, characterised in that the sensor (30) is assigned storage means for the formation of an "electronic memory".

8. A switchgear according to Claim 5 wherein the movable contact is arranged on a contact carrier rotatable about an axis of rotation, characterised in that the Hall effect sensor (40) serves as magnetic field sensor for sensing the position of the axis of rotation of the contact carrier (103).

9. A switchgear according to Claim 7, characterised in that the detection of contact fusion takes place by logic coupling of the signals "switching position" of the sensor (10) and "contact shaft" of the sensor (40).

10. A switchgear according to one of Claims 2 to 7, characterised in that the position dependency of the magnetic fields of permanent magnets measured by the sensors (10, 30, 40) is produced by the components of the switch mechanism which are to be monitored.

11. A switchgear according to Claim 9 with a drive bridge as component of the drive mechanism, characterised in that the component of the switch mechanism to be monitored, for example the drive bridge (105), consists of ferromagnetic material.

12. A switchgear according to Claim 9 with a contact shaft and a latch as components of the drive mechanism, characterised in that the component of the switch mechanism to be monitored, for example the contact shaft (116) and latch (115), bears a part made of ferromagnetic material.

13. A switchgear according to Claim 11, characterised in that the part made of ferromagnetic material has the form of an iron rod or hollow cylinder and for example has a length of approximately 4 mm and a thickness of approximately 4 mm.

14. A switchgear according to Claim 3, characterised in that a reed contact (20) is provided for the detection of short-circuit tripping.

15. A switchgear according to Claim 14, characterised in that the reed contact (20) is assigned storage means for the formation of an "electronic memory".

16. A switchgear according to Claim 15, characterised in that the reed contact (20) is shielded from external magnetic interference fields by a ferromagnetic shield.

17. A switchgear according to Claim 4, characterised in that the signal for an acoustic event detected by the acoustic sensor (130) and the signal for overcurrent tripping generated by a differential Hall effect probe are fed via time stages (141, 142) to an AND gate (150) and a short-circuit event is indicated in the case of the overlapping of the two signals on the time scale.

18. A switchgear according to Claim 17, characterised in that the acoustic sensor (130) is a capacitor microphone or a piezoelectric microphone which is arranged outside the switchgear housing (100).

19. A switchgear according to one of the preceding claims, characterised by a multi-pole design.

20. An arrangement comprising a plurality of switchgears according to one of the preceding claims with the following features:

- the identification of the on/off switching state and of the tripping state, in particular overcurrent- or short-circuit tripping, of the switchgears (100, 100' ...) is effected by sensors (10, 20, 30, 40)
- the switchgears (100, 100' ...) are connected via a data bus (1000) to a monitoring device (600) and report the occurrence of a tripping state without delay to said monitoring device;
- the switchgears (100, 100' ...) are installed as distributor switches in a common distributor cabinet (500) ;
- the detection of short-circuits in the distributor switches (100, 100' ) is effected by one or more acoustic sensors (130) permanently installed at suitable measurement locations in the distributor cabinet (500);
- the acoustic events, selected in accordance with acoustic level and time characteristic, can be detected as possible short-circuit events and are reported without delay as electric signals via the data bus (1000) to the monitoring device (600);
- the monitoring device (600) cancels an acoustic message unless a tripping message arrives within a preset time window;
- the monitoring device (600) establishes short-circuit tripping when the acoustic message and the tripping message arrive within the preset time window and assigns the short-circuit tripping to that distributor switch (100, 100' ...) ) which has transmitted the tripping message.

**Revendications**

1. Appareil de commutation électromécanique comportant, au moins un contact mobile et un entraînement associé disposés dans un boîtier d'appareil (100, 300), des moyens de détection (10, 20, 30, 40, 130) destinés à la détection sans contact de l'état de commutation, notamment des détecteurs de champ magnétique (10, 20, 30, 40), et le cas échéant des détecteurs supplémentaires (130) comme des détecteurs acoustiques ou analogues, dont les signaux de détection indiquent par combinaison logique des états de commutation définis, caractérisé par le fait que les détecteurs (10, 20, 30, 40, 130) sont disposés dans un boîtier (400) qui leur est propre à un emplacement approprié, que pour la surveillance des états de commutation le boîtier (400) des détecteurs est couplé latéralement au boîtier de l'appareil de commutation (100, 300), et qu'il n'existe ni liaison active mécanique ou optique ni liaison de ligne électrique allant du boîtier de l'appareil de commutation (100, 300) et/ou des conducteurs de réseau qui y sont raccordés vers l'intérieur du boîtier (400) des détecteurs.

2. Appareil de commutation selon la revendication 1, caractérisé par le fait que les moyens de détection, prévus pour la détection de l'état de commutation marche/arrêt, d'un déclenchement par surintensité et d'un collage des contacts, sont des détecteurs (10, 30, 40), disposés dans le boîtier (400) des détecteurs, de mesure de champs magnétiques dépendant de la position d'aimants permanents.

3. Appareil de commutation selon la revendication 1, caractérisé par le fait que le moyen de détection, prévu pour le déclenchement par court-circuit, est un détecteur, disposé dans le boîtier (400) des détecteurs, de mesure du champ magnétique du courant passant dans l'appareil de commutation.

4. Appareil de commutation selon la revendication 1, caractérisé par le fait que le moyen de détection prévu pour détecter le bruit de commutation, est un détecteur acoustique qui est disposé dans le boîtier (400) des détecteurs et dont le signal est exploité en commun avec le signal de déclenchement par surintensité afin de détecter un court-circuit.

5. Appareil de commutation selon la revendication 2, caractérisé par le fait que la détection de la position de commutation marche/arrêt est effectuée au moyen d'un détecteur différentiel statique à effet Hall (10).

6. Appareil de commutation selon la revendication 2, caractérisé par le fait que la détection du déclenchement par surintensité est effectuée au moyen d'un détecteur différentiel statique à effet Hall (30).

7. Appareil de commutation selon la revendication 4, caractérisé par le fait que des moyens de mémorisation destinés à réaliser "une mémoire électronique" sont associés au détecteur (30).

8. Appareil de commutation selon la revendication 5, dans lequel le contact mobile est disposé sur un porte-contact pouvant tourner par rapport à un axe de rotation, caractérisé par le fait que le détecteur à effet Hall (40) sert en tant que détecteur de champ magnétique pour la détection sensorielle de la position de l'axe de rotation du porte-contact (103).

9. Appareil de commutation selon la revendication 7, caractérisé par le fait que la détection d'un collage des contacts est effectuée par combinaison logique des signaux "position de commutation" du détecteur (10) et "broche de contact" du détecteur (40).

10. Appareil de commutation selon l'une quelconque des revendications 2 à 7, caractérisé par le fait que la dépendance de position des champs magnétiques d'aimants permanents mesurés par les détecteurs (10, 30, 40) est engendrée par les composants à surveiller du mécanisme du commutateur.

11. Appareil de commutation selon la revendication 9, comportant un étrier d'entraînement en tant que composant du mécanisme du commutateur, caractérisé par le fait que les composants à surveiller du mécanisme du commutateur, par exemple l'étrier d'entraînement (105), sont en matériau ferromagnétique.

12. Appareil de commutation selon la revendication 9, comportant une broche de contact et un levier à cliquet en tant que composants du mécanisme d'entraînement, caractérisé par le fait que les composants à surveiller du mécanisme du commutateur, par exemple la broche de contact (116) et le levier à cliquet (115), portent un élément en matériau ferromagnétique.

13. Appareil de commutation selon la revendication 11. caractérisé par le fait que l'élément en matériau ferromagnétique est réalisé sous la forme d'un bâtonnet ou d'un cylindre creux en fer, et a par exemple une longueur de l'ordre de 4 mm et une épaisseur de l'ordre de 4 mm.

14. Appareil de commutation selon la revendication 3, caractérisé par le fait qu'un contact reed (20) est prévu pour la détection du déclenchement par court-circuit.

15. Appareil de commutation selon la revendication 14, caractérisé par le fait que des moyens de mémorisation sont associés au contact reed (20) pour réaliser une "mémoire électronique".

16. Appareil de commutation selon la revendication 15, caractérisé par le fait que le contact reed (20) est protégé contre des champs extérieurs perturbateurs par un écran ferromagnétique.

17. Appareil de commutation selon la revendication 4, caractérisé par le fait que le signal détecté par le détecteur acoustique (130) pour un phénomène sonore, et le signal de déclenchement par surintensité généré par une sonde différentielle à effet Hall, sont transmis à un élément ET (150) par l'intermédiaire d'étages de temporisation (141, 142), et qu'un phénomène de court-circuit est affiché lorsque les deux signaux se recouvrent dans le temps.

18. Appareil de commutation selon la revendication 17, caractérisé par le fait que le détecteur acoustique (130) est un microphone à condensateur ou un microphone piézoélectrique, qui est disposé en dehors du boîtier de l'appareil (100).

19. Appareil de commutation selon l'une quelconque des revendications précédentes, caractérisé par une réalisation multipolaire.

20. Dispositif comportant plusieurs appareils de commutation selon l'une quelconque des revendications précédentes, présentant les caractéristiques suivantes :

- la détection de l'état de commutation marche/arrêt et de l'état de déclenchement, notamment du déclenchement par surintensité ou par court-circuit, des appareils de commutation (100, 100' ...) est effectuée par des détecteurs (10, 20, 30, 40)
- les appareils de commutation (100, 100' ...) sont reliés à un dispositif de surveillance (600) par l'intermédiaire d'un bus de données (1000), et signalent à ce dernier sans retard la survenance d'un état de déclenchement
- les appareils de commutation (100, 100' ...) sont installés en tant que commutateurs de distribution dans une armoire de distribution (500) commune
- la détection de court-circuit au niveau des commutateurs de distribution (100, 100' ...) est effectuée par l'intermédiaire d'un ou de plusieurs détecteurs acoustiques (130), qui sont montés fixes dans l'armoire de distribution (500) à des emplacements de mesure appropriés
- les événements sonores peuvent être sélectionnés en fonction du niveau sonore et de la variation dans le temps en tant qu'événements de court-circuit possibles, et sont transmis sous forme de signaux électriques au dispositif de surveillance (600) par l'intermédiaire du bus de données (1000)
- le dispositif de surveillance (600) efface un signal acoustique si un signal de déclenchement n'arrive pas à l'intérieur d'une fenêtre de temps prescrite
- le dispositif de surveillance (600) constate un déclenchement par court-circuit si le signal acoustique et le signal de déclenchement arrivent à l'intérieur de la fenêtre de temps prescrite, et associe le déclenchement par court-circuit au commutateur de distribution (100, 100' ...) qui a émis le signal de déclenchement.

EP 0 777 907 B1

| Erkennungs-funktion | Schalt-stellung | Kurz-schluß | Über-strom | Kontakt-verschweißen |
|---|---|---|---|---|

Sensoren

1 Positions-sensor  2 B-Feld-sensor  3 Positions-sensor  4 Positions-sensor

5  6

Ein
Aus
Schaltstellung

Kurzschluß

Überstrom

Ja
Nein
Verschweißung

**FIG 1**

12

FIG 2

FIG 3

FIG 4

N

200

S

202

203

ca 4mm

204

205

FIG 5

Fig 6

EP 0 777 907 B1

FIG 7

18

**FIG 8**

FIG 9

FIG 10

EP 0 777 907 B1

FIG 11